# EUROPEAN PATENT SPECIFICATION

(11) **EP 4 437 377 B1**
(45) Date of publication and mention of the grant of the patent: **01.07.2026**
(21) Application number: 22822056.2
(22) Date of filing: 24.11.2022
(51) Int. Cl.: G02B 21/00

(54) **RE-SCAN OPTICAL SYSTEM FOR A CONFOCAL MICROSCOPE**
OPTISCHES SYSTEM MIT RE-SCAN FÜR EIN KONFOKALES MIKROSKOP
SYSTÈME OPTIQUE DE REBALAYAGE POUR MICROSCOPE CONFOCAL

(30) Priority: 24.11.2021 EP 21210325
(43) Date of publication of application: 02.10.2024
(73) Proprietor: Katholieke Universiteit Leuven, 3000 Leuven (BE)
(72) Inventor: DEDECKER, Peter, 2230 Ramsel (BE); VANDENBERG, Wim, 3390 Tielt-Winge (BE); VAN DEN EYNDE, Robin, 3118 Werchter (BE)
(74) Representative: De Clercq & Partners
(86) International application number: PCT/EP2022/083123
(87) International publication number: WO 2023/094519

(56) References cited:
- WO-A1-2020/263094
- DE-A1- 102005 044 842
- DUBOSE THEODORE B ET AL: "Super-resolution retinal imaging using optically reassigned scanning laser ophthalmoscopy", NATURE PHOTONICS, NATURE PUBLISHING GROUP UK, LONDON, vol. 13, no. 4, 11 March 2019 (2019-03-11), pages 257 - 262, XP036738161, ISSN: 1749-4885, [retrieved on 20190311], DOI: 10.1038/S41566-019-0369-7

## Description

### Field of the invention

The present invention is in a domain of re-scan optical systems for obtaining an image of a sample, in particular in a domain of confocal microscopy.

### Background to the invention

Fluorescence microscopy is a key technique in the life and material sciences. Fast and sensitive three-dimensional imaging of extended samples is becoming increasingly important and essential for modern research and diagnostics. The current gold standard is confocal imaging and related approaches such as multiphoton imaging. Most confocal instruments make use of a small circular aperture, which means that only light from a single spot is collected. To make images, this spot must be scanned across the sample, which takes time. Confocal instruments are therefore typically slow, easily requiring minutes or hours to visualize 3D samples, interfering with the needs of powerful new methodologies such as the use of tissue mimics and 'omics' techniques, or the observation of dynamic systems. However, there are few or no other methodologies available that can deliver the same spatial resolution while still being compatible with 3D imaging and elevated sample throughput using approaches such as multi-well plates. Light sheet microscopy is often claimed as a solution, though typically suffers from a reduced resolution and sensitivity and also has difficulties working in sample formats such as multiwell plates. Spinning-disk confocal, on the other hand, achieves a drastic speedup by parallellizing the imaging process, but suffers from a low light-throughput and pinhole crosstalk.

One way to increase the temporal throughput is to make use different apertures, such as using a line instead of a point. This means that a full line of the sample can be acquired at once, and therefore one scan direction is eliminated. For a 512 x 512 image, for example, the scanning time is in principle reduced by a factor of 512. Such line scan systems were already demonstrated in the 1990s. Since then the performance has advanced considerably through the availability of better detectors and also the use of scanning-descanning-scanning systems that enable the use of two-dimensional cameras. A re-scan confocal microscope is known, for instance, from De Luca GM, Breedijk RM, Brandt RA, et al. Rescan confocal microscopy: scanning twice for better resolution. Biomed Opt Express. 2013;4(11):2644-2656. Published 2013 Oct 25. doi:10.1364/BOE.4.002644.

However, the performance of these systems and their instrumental simplicity is limited by the use of dual synchronized scanners, which adds complexity and overhead and also reduced the temporal resolution that can be obtained. This makes it difficult, for example, to image processes where the sample or fluorophore dynamics occur on comparable timescales. It also means that the software and hardware used to control the measurement must actively control these scanners and synchronize them with the measurement process. They also have a complex optical set up, leading to problems of stability and alignment. WO 2020/263094 A1 relates to a re-scan microscope system that comprises a rotatable element that is configured to rotate over 360 degrees. According to the latter prior art one reflective surface performs the scanning, de-scanning, while a different reflective surface performs the re-scanning.

### Summary of the invention

Provided herein according to claim 1 is a re-scan optical system (100) for obtaining an image of a sample (190) comprising:
- a moveable mirror (180) configured for:
   - scanning an illumination light, IL (130), as an IL pattern (126) over and/or through the sample (190),
   - de-scanning sample light, SL (160), from the sample (190), the SL caused by the IL pattern (126), and
   - re-scanning the de-scanned SL as an SL pattern (152) over an imaging plane (154) of an imaging system (156),
wherein
light paths incident with (132a, 162a, 166a) or reflected by (134a, 164a, 168a) the moveable mirror (180) pass through (only) one (L2-3) or (only) two (L2, L3) moveable mirror focusing, MMF, lenses, wherein an MMF lens (L2, L3, L2-3) is a lens or lens group separated from the moveable mirror (180) by its focal length, and one and the same reflective surface of the moveable mirror (180) performs the scanning, de-scanning and re-scanning.

According to one aspect:
- the IL (130) propagates along an IL optical path (131) and the SL (160) propagates along an SL optical path (161)
- a part of the IL optical path (131) propagates along an IL incident light path (132a) and is reflected by the moveable mirror (180) along an IL reflected light path (134a) for scanning Illumination light over and/or through the sample (190)),
- a part of the SL optical path (161) propagates along a SL first incident light path (162a) and is reflected by the moveable mirror (180) along a SL first reflected light path (164a) thereby de-scanning the SL, and
- a part of the SL optical path (161) propagates along a SL second incident path (166a) and is reflected by the moveable mirror (180) along a SL second reflected light path (168a) thereby re-scanning the SL towards the imaging plane (154),
wherein
- a first group of light paths comprises the IL incident light path (132a), the SL first reflected light path (164a) and the SL second incident paths (166a),
- a second group of light paths comprises the IL reflected light path (134a), the SL first incident light path (162a), and the SL second reflected light path (168a), and
- the first group and the second group of light paths pass through the one (L2-3) or two (L2, or L3) MMF lenses.

According to one aspect:
- the first group of light paths pass through one of the two MMF lenses, a first MMF lens (L2), separated from the moveable mirror (180) by its focal length, and
- the second group of light paths passes through the other of the two MMF lenses, a second (separate) MMF lens (L3), different from the first MMF lens (L2), separated from the moveable mirror (180) by its focal length.

Both the first group of light paths and the second group of light paths may both pass through the one MMF lens (L2-3) separated from the moveable mirror (180) by its focal length.

The re-scan optical system (100) may further comprise an offset reflector (184), wherein:
- the SL first reflected light path (164a) is a part of a first static light path (164) propagating de-scanned SL from the sample (190) ,
- the first static light path (164) (after passing through the MMF lens) is reflected back towards the moveable mirror (180) by the offset reflector (184) along a second static light path (166), wherein the first static light path (164) is offset from the second static light path (166),
- the second static light path (166) passes through the same MMF lens (L2, L3, L2-3) and is incident with the moveable mirror (180) along the SL second incident path (166a).

According to one aspect:
- the offset reflector (184) is a back mirror (184),
- a (80 to 100 deg) dichroic mirror (186a) is provided in the first static light path (164) and the second static light path (166), and
- the first static light path (164) passes through the dichroic mirror (186a), is reflected by the back mirror (184) along the second static light path (166) and through the dichroic mirror (186a).

According to one aspect:
- the offset reflector (184) is a retroreflector,
- a (80 to 100 deg) dichroic mirror (186a) is provided in the first static light path (164) and the second static light path (166), and
- the first static light path (164) passes through the dichroic mirror (186a), is reflected by the retroreflector along the second static light path (166) and through the dichroic mirror (186a).

The offset reflector may be a (-10 to +10 deg) dichroic mirror (186b), and IL incident light path (132) passes (from the light source) through the (non-reflective side of the) dichroic mirror (186b).

The re-scan optical system (100) may further comprising an optical slit (S), wherein the first static light path (164) and second static light path (166) pass through the optical slit (S).

An angle of incidence of the IL incident light path (132a) with the moveable mirror (180) and an angle of reflection of the SL first reflected light path (164a) with the moveable mirror (180) are the same, and, are both may be greater than an angle of incidence of the SL second incident path (166a) with the moveable mirror (180).

Further provided is a confocal microscope incorporating the re-scan optical system (100) as described herein.

### Figure Legends

**FIG. 1A** and **1B** depict separate sample light (FIG. 1A) and illumination light (FIG. 1B) paths in a schematic illustration of a system presently described, having two separate movable mirror focusing, MMF, lenses.
**FIG. 2A** and **2B** are similar to FIG. 1A and FIG. 1B respectively, having one separate movable mirror focusing, MMF, lens.
**FIG. 3A** and **3B** are similar to FIG. 1A and FIG. 1B respectively, with an addition of an optical slit, a scan reflecting mirror, imaging system, re-scanning lens group
**FIG. 4A** and **4B** are similar to FIG. 1A and FIG. 1B respectively, and are schematics of an exemplary system; illumination light is reflected along the third static light path by a (90deg) dichroic mirror.
**FIG. 5A** and **5B** are similar to FIG. 1A and FIG. 1B respectively, and are schematics of an exemplary system; illumination light enters the third static light path by passing through a dichroic mirror.
**FIG. 6** shows transverse cross sections of first and second cylindrical regions relative to a first MMF lens (L2).
**FIG. 7** shows transverse cross sections of third and fourth cylindrical regions relative to a second MMF lens (L3).
**FIG. 8** shows transverse cross sections of first, second, third and fourth cylindrical regions relative to a single MMF lens (L2-3).

### Detailed description of invention

Before the present system and method of the invention are described, it is to be understood that this invention is not limited to particular systems and methods or combinations described, since such systems and methods and combinations may, of course, vary. It is also to be understood that the terminology used herein is not intended to be limiting, since the scope of the present invention will be limited only by the appended claims.

As used herein, the singular forms "a", "an", and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps. It will be appreciated that the terms "comprising", "comprises" and "comprised of" as used herein comprise the terms "consisting of", "consists" and "consists of".

The recitation of numerical ranges by endpoints includes all numbers and fractions subsumed within the respective ranges, as well as the recited endpoints.

The term "about" or "approximately" as used herein when referring to a measurable value such as a parameter, an amount, a temporal duration, and the like, is meant to encompass variations of +/-10% or less, preferably +/-5% or less, more preferably +/-1% or less, and still more preferably +/-0.1% or less of and from the specified value, insofar such variations are appropriate to perform in the disclosed invention. It is to be understood that the value to which the modifier "about" or "approximately" refers is itself also specifically, and preferably, disclosed.

Whereas the terms "one or more" or "at least one", such as one or more or at least one member(s) of a group of members, is clear *per se,* by means of further exemplification, the term encompasses *inter alia* a reference to any one of said members, or to any two or more of said members, such as, *e.g*., any ≥3, ≥4, ≥5, ≥6 or ≥7 etc. of said members, and up to all said members.

All references cited in the present specification are hereby incorporated by reference in their entirety. In particular, the teachings of all references herein specifically referred to are incorporated by reference.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

In the following passages, different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the appended claims, any of the claimed embodiments can be used in any combination.

In the present description of the invention, reference is made to the accompanying drawings that form a part hereof, and in which are shown by way of illustration only of specific embodiments in which the invention may be practiced. Parenthesized or emboldened reference numerals affixed to respective elements merely exemplify the elements by way of example, with which it is not intended to limit the respective elements. Unless otherwise indicated, all figures and drawings in this document are not to scale and are chosen for the purpose of illustrating different embodiments of the invention. In particular the dimensions of the various components are depicted in illustrative terms only, and no relationship between the dimensions of the various components should be inferred from the drawings, unless so indicated.

It is to be understood that other embodiments may be utilised and structural or logical changes may be made without departing from the scope of the present invention. The following detailed description, therefore, is not to be taken in a limiting sense, and the scope of the present invention is defined by the appended claims.

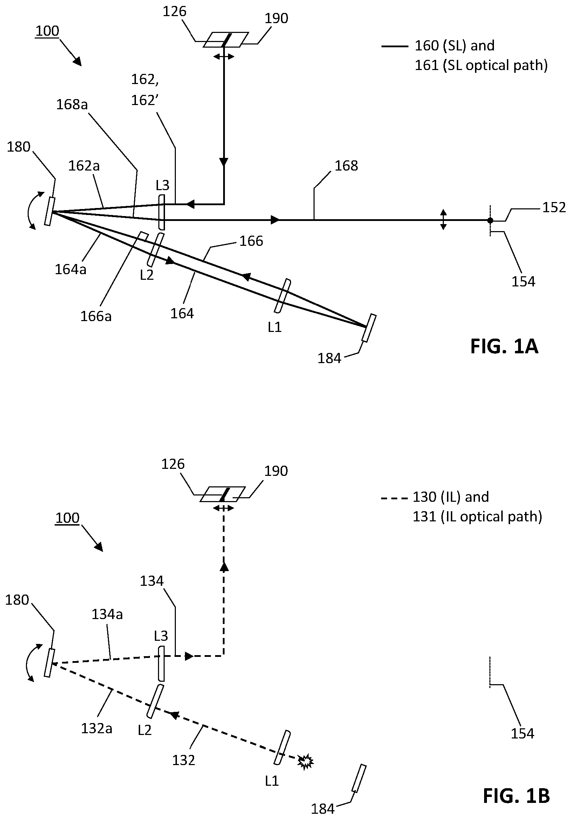

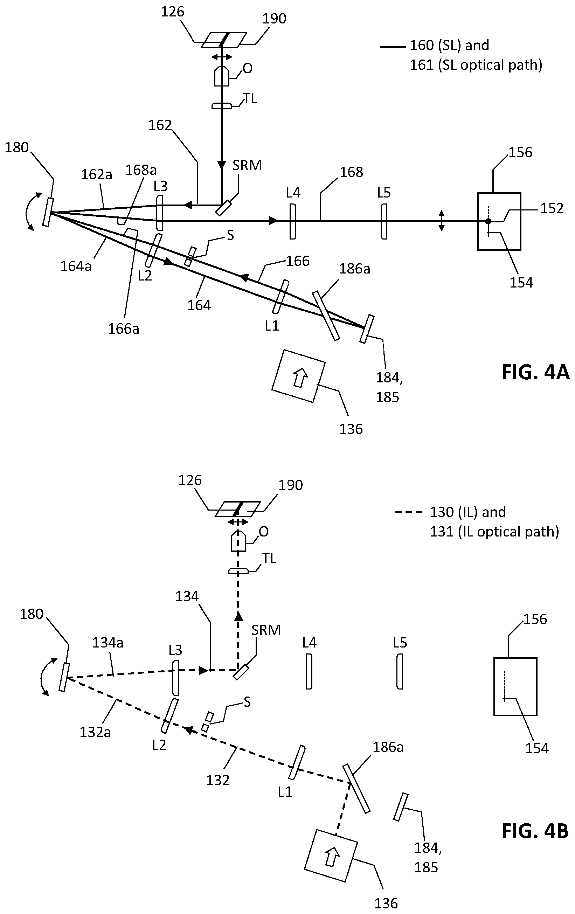

Provided herein is a re-scan optical system (100) (also known as "system" herein) for obtaining an image of a sample (190). General schematics of the system (100) are shown in **FIGs. 1A** and **1B****,** **FIGs. 2A** and **2B****,** and **FIGs. 3A** and **3B****.** Examples of the system (100) are shown in **FIGs. 4A** to **5B****.**

The system (100) comprises a moveable mirror (180) configured for:
- scanning an illumination light, IL (130), as an IL pattern (126) over and/or through the sample (190),
- de-scanning sample light, SL (160), from the sample (190), the SL caused by the IL pattern (126), and
- re-scanning the de-scanned SL as an SL pattern (152) over an imaging plane (154) of an imaging system (156).

Light paths incident with (132a, 162a, 166a) or reflected by (134a, 164a, 168a) the moveable mirror (180) pass through one (L2-3) or two (L2, L3) moveable mirror focusing, MMF, lenses. An MMF lens (L2, L3, L2-3) is a static (stationary) lens or lens group separated from the moveable mirror (180) by its focal length. There are typically no additional optical elements between the MMF lens (L2, L3, L2-3) and the moveable mirror (180).

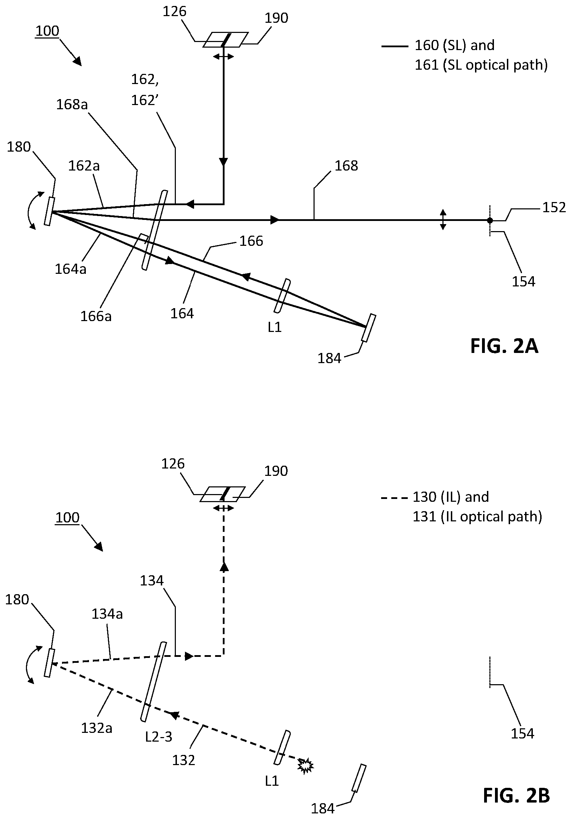

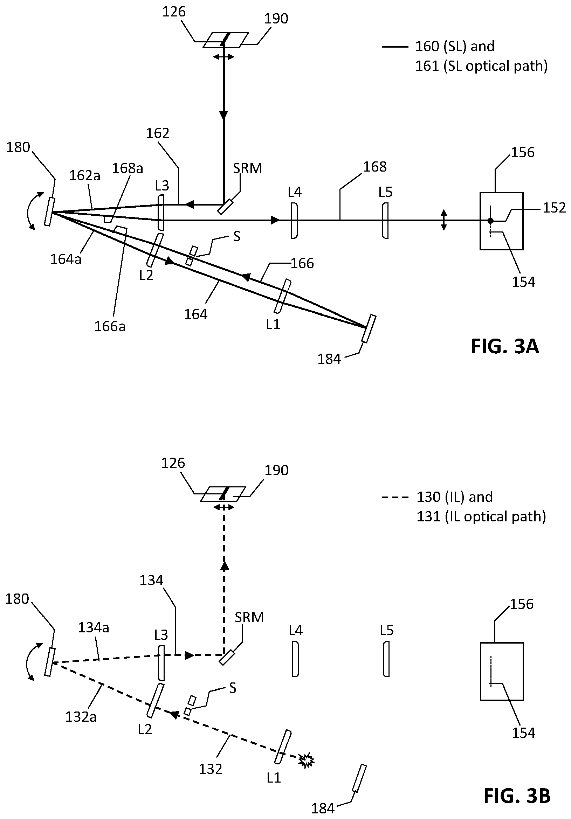

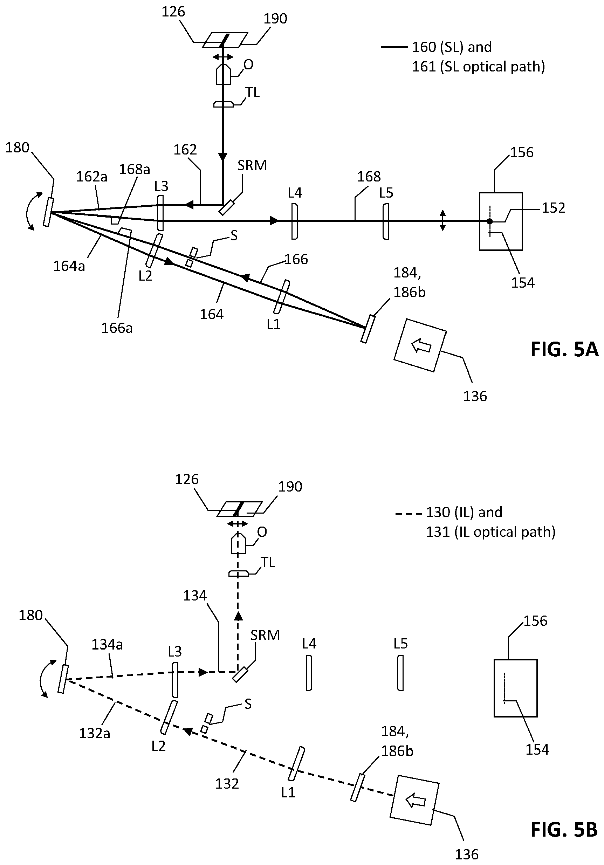

A schematic depicting a system having two MMF lens (L2, L3) is shown in **FIGs. 1A** and **1B** and **FIGs. 3A** and **3B****.** A schematic depicting a system having only one MMF lens (L2-3) is shown in **FIGs. 2A** and **2B****.** Particular configurations of a system are shown in **FIGs. 4A** and **4B****,** and **FIGs. 5A** and **5B****;** while these are depicted with two MMF lenses (L2, L3), it is understood that the two MMF lenses (L2, L3) may be replaced with a single MMF lens (L2-3).

By channelling all light paths incident with (132a, 162a, 166a) or reflected by (134a, 164a, 168a) by the movable moveable mirror (180) such that they pass through only one (L2-3) or two (L2, L3) MMF lenses, the design of the system is simplified. In particular, the arrangement has an effect that at least two image axes are within the same MMF lenses (L2, L3, L2-3), which reduces number of lenses, increases stability, increases compactness, leads to lower cost, and reduces the number of degrees of freedom that need alignment.

In particular, de-scanned SL (along a first static light path (164)) propagating away from the moveable mirror (180) is returned (along a second static light path (166)) by reflection back to the moveable mirror (180) by an offset reflector (184). The value of the offset is selected such that the first static light path (164) and the second static light path (166) are able to pass through the same MMF lens. The offset allows two SL (static) paths to pass through the same MMF lens (L3, L2-3).

In other words, the invention discloses a novel type of line scan confocal that achieves (much) faster imaging than the existing systems and also offers increased robustness and simplicity by requiring fewer and more robust moving components. In the present invention only a single movable mirror is used, and a scanning-de-scanning-(re-)scanning layout is achieved by passing over this movable mirror three times. Further all light paths incident with (132a, 162a, 166a) or reflected by (134a, 164a, 168a) by the movable moveable mirror (180) pass through only one (L2-3) or two (L2, L3) MMF lenses, the design of the system is simplified.

Particular embodiments include:
1. A system comprising a movable mirror (scanner) or analogous element located along the optical path, between the objective on the one hand and the light source and imaging plane (detector) on the other hand.
2. Herein illumination (excitation) light is reflected or otherwise redirected by the movable mirror (scanner) and directed into the sample via the objective. Movement of the mirror causes the light to be scanned across the sample.
3. Sample light (light emitted by the sample) is collected by the same objective and is reflected or otherwise redirected by the scanner. Since this is the second passage of the light over the scanner, the propagation direction of the light after this step is independent of the orientation of the scanner.
4. Emitted light is reflected by an optical element that reflects only a subset of the light associated with the imaging, e.g. a dichroic mirror or a partially-transparent mirror. This element is oriented such that the light is reflected back towards the movable mirror, but with a slight displacement that causes it to pass through a slit aperture that together make up a sectioning element.
5. Sample light is reflected from the scanner once again. The small displacement imparted in step 4 now allows the light to be directed towards the (two-dimensional) detector. The motion of scanner translates the fluorescence over the detector in tandem with the displacement of the excitation light in the sample, directly building up an image of the sample on the detector.

If desired, this basic scheme can be further enhanced by incorporating additional functionality in the instrument, such as the synchronization of the illumination and/or detection with the scanning process to introduce patterned illumination, possibly augmented by the inclusion of additional optical elements such as an additional scanner or other elements that may or may not be similar to the scanner intrinsic to our invention. Other strategies compatible with confocal imaging may also be added to this design.

The result is a very sensitive, 3D-capable fluorescence microscope that can deliver much faster (hundreds of times faster) imaging compared to a classical confocal microscope, while delivering more sensitive and aberration-free imaging of a wider range of samples compared to systems on the market today. By not requiring dual synchronized scanners, it allows the use of higher-performance scanners while greatly reducing the complexity of the instrument and associated hardware and software. In addition to providing much faster imaging, this ability also opens up new applications such as in-tissue high-content/high-throughput imaging or various types of advanced imaging, such as super-resolution imaging based amongst others on single-fluorophore detection.

The IL pattern (126) may be a spot, line or other shape, most preferably a line. The SL pattern (152) may be a spot, line or other shape, most preferably a line.

The IL has a wavelength or is within a wavelength band that is different from the SL. Preferably the IL is excitation light, having an excitation wavelength or being within an excitation wavelength band. Preferably, the SL is emission light, having an emission wavelength or being within an emission wavelength band. The IL (emission) and SL (excitation) are at least partially separable for detection, using a dichroic element, such as a dichroic filter or dichroic mirror.

The IL (160) is typically light that excites photons in the sample (190) and may therefore also be referred to as excitation light. However, the SL (130) may also be caused by other effects, such as fluorescence, phosphorescent, reflection, Raman effect, Billouin radiation, etc.

The IL may be fluorescence excitation light and the SL may be fluorescence emission light. Fluorescent labels are well known in the art, and include genetically encoded labels (*e.g.* EGFP,mCherry), chemigenetic labels, (*e.g.* FAST, Snap-Tag), organic fluorophores: (*e.g.* ATTO488, alexa fluor 647), Other dyes (*e.g*. Qdot 625).

The IL may be phosphorescent excitation light and the SL may be phosphorescent emission light. Fluorescent labels are well known in the art, and include Europium based phosphors.

The IL may be luminescent excitation light and the SL may be luminescent emission light. Luminescent labels are well known in the art, and include nitrogen vacancies (*e.g*. in nanodiamonds).

The IL may be Raman excitation light and the SL may be Raman (anti-Stokes) emission light. The IL may be Brillouin excitation light and the SL may be Brillouin emission light.

Moving the IL pattern (126) over and/ through the sample may be referred to as scanning. Causing the scanning SL (160) to become static may be referred to as de-scanning. Moving the SL pattern (152) over the imaging plane (154) may also be referred to as re-scanning. The same moveable mirror (180) is used for scanning, de-scanning and re-scanning. In the present system, using the same moveable mirror (180) for scanning, de-scanning, as well as re-scanning, prevents synchronisation problems. If two separate moveable mirrors are used for scanning and re-scanning, then these two moveable mirrors may move out of sync, which deteriorates the obtained images. The system described here solves this problem.

IL (130) propagates towards the moveable mirror (180), and is reflected (once) by the moveable mirror (180) thereby generating scanning IL for scanning as the IL pattern (126) over and/or through the sample (190). The IL (130) propagates along an IL light path (131).

SL (160) from the sample and is reflected twice by the moveable mirror (180), thereby de-scanning and re-scanning the SL as the SL pattern (152) onto the imaging plane (154). The SL (160) propagates along an SL light path (161).

The present re-scan system (100) may be understood to have three dynamic light paths (162, 168, 134) and three static light paths (164, 166, 132). Each dynamic or static light path propagates longitudinally.

Each dynamic or static light path may be understood to propagate within radial confines of a longitudinal cylindrical region (262, 264, 266, 268) disposed along or parallel to an optical axis of the (each) MMF lens. The longitudinal cylindrical region (262, 264, 266, 268) is longitudinally straight *i.e*. contains no reflectors, and is smaller than the MMF lens diameter.

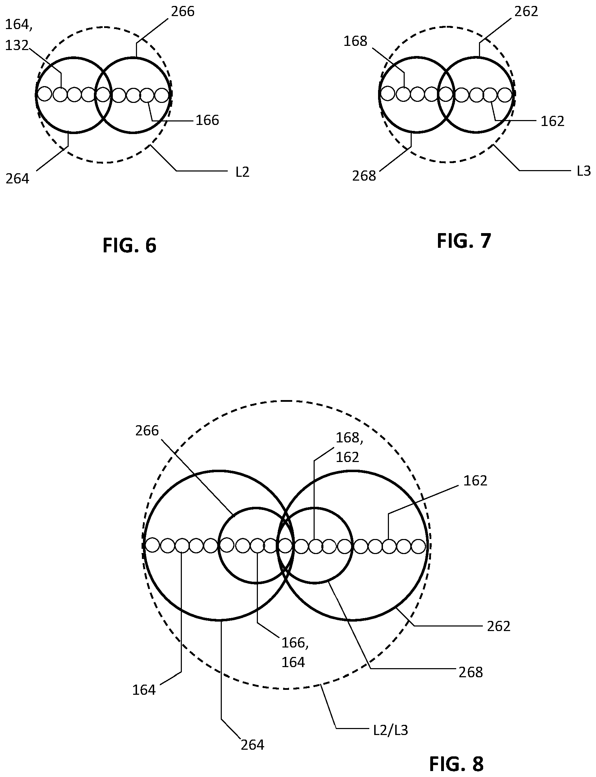

An example of longitudinal cylindrical regions (264, 266) of static light paths (166, 164) with respect to one (first) MMF lens (L2) is shown in **FIG. 6****.** Multiple positions of the static light path (166, 164) within radial confines of the longitudinal cylindrical regions (264, 266) are shown as a plurality of smaller circles which represent changes in position of the respective static light paths (166, 164) along their respective lengths as the static light paths (166, 164) converge or collimate due to intervening lenses (*e.g*. MMF lens (L2), ORF lens (L1)).

An example of longitudinal cylindrical regions (262, 268) of dynamic light paths (162, 168) with respect to one (second) MMF lens (L3) is shown in **FIG. 7****.** Multiple positions of the dynamic light path (162, 168) within radial confines of the longitudinal cylindrical regions (262, 268) are shown as a plurality of smaller circles which represent changes in position of the respective dynamic light paths (162, 168) along their respective lengths as the dynamic light paths (162, 168) converge or collimate due to intervening lenses (e.g. MMF lens (L3), rescanning lens group (L4/5)), or as the dynamic light paths (162, 168) change position due to scanning and rescanning.

An example of longitudinal cylindrical regions (262, 268) of dynamic light paths (162, 168) and of longitudinal cylindrical regions (264, 266) of static light paths (164,166) with respect to one (combined) MMF lens (L2-3) is shown in **FIG. 8****.** Multiple positions of the static (164, 166) and dynamic (162, 168) light paths and within radial confines of the respective longitudinal cylindrical regions (264, 266, 262, 268) are shown as a plurality of smaller circles which represent changes in position of the respective light paths (162, 164, 166, 168) along their respective lengths as the light paths (162, 164, 166, 168) converge or collimate due to intervening lenses (e.g. MMF lens (L2-3), rescanning lens group (L4/5), ORF lens (L1)), or as the dynamic light paths (162, 168) change position due to scanning and rescanning.

A dynamic light path is one that moves for scanning, de-scanning or re-scanning of the pattern. A static light path is one that is stationary; it is a result of de-scanning, or is static, propagating from the IL source.

A first dynamic light path (162) may be understood to be a part of the SL optical path (161) from the sample to the moveable mirror (as a de-scanner). A second dynamic light (168) may be understood to be a part of the SL optical path (161) from the moveable mirror (180) (as a re-scanner) to the imaging plane (152). A third dynamic light path (134) may be understood to be a part of the IL optical path (131) from the moveable mirror (180) (as a scanner) to the sample (190).

A first static light path (164) may be understood to be a part of the SL optical path (161) from the moveable mirror (180) (as a de-scanner) to the offset reflector (184). A second static light path (166) may be understood to be a part of the SL optical path (161) from the offset reflector (184) to moveable mirror (180) (as a re-scanner). A third static light path (132) may be understood to be a part of the IL optical path (131) from the light source (136) to the moveable mirror (180) (as a scanner).

The first static light path (164) and third static light path (132) follow the same path, but propagate in opposite directions. The first dynamic light path (162) and third dynamic light path (134) follow the same path, but propagate in opposite directions.

The first static light path (164) propagates from the moveable mirror (180) longitudinally through the MMF lens (L2, L2-3) until it is incident with the offset reflector (184); in other words the first static light path (164) between the moveable mirror (180) and the offset reflector (184) is not reflected by an intervening mirror or prism. The first static light path (164) may be understood to propagate within radial confines of a first longitudinal cylindrical region (264) disposed along or parallel to an optical axis of its (first) MMF lens (L2, L2-3) **(****FIG. 6, FIG. 8****).** The first longitudinal cylindrical region (264) is longitudinally straight *i.e.* contains no reflectors, and is smaller than the MMF lens diameter. The first longitudinal cylindrical region (264) is disposed between the moveable mirror (180) and the offset reflector (184).

The second static light path (166) propagates from the offset reflector (184) longitudinally through the MMF lens (L2, L2-3) until it is incident with the moveable mirror (180); in other words the second static light path (166) between the offset reflector (184) and the moveable mirror (180) is not reflected by an intervening mirror or prism. The second static light path (166) may be understood to propagate within radial confines of a second longitudinal cylindrical region (266) disposed along or parallel to an optical axis of its (first) MMF lens (L2, L2-3) **(****FIG. 6, FIG. 8****).** The longitudinal cylindrical region (266) is longitudinally straight *i.e.* contains no reflectors, and is smaller than the MFR lens diameter. The second longitudinal cylindrical region (266) is disposed between the moveable mirror (180) and the offset reflector (184).

The third static light path (132) propagates from the dichroic mirror (186a, 186b) longitudinally through the MMF lens (L2, L2-3) until it is incident with the moveable mirror (180); in other words the third static light path (132) between the dichroic mirror (186a, 186b) and the moveable mirror (180) is not reflected by an intervening mirror or prism. The third static light path (132) may be understood to propagate within the radial confines of the first longitudinal cylindrical region (264) disposed along or parallel to an optical axis of its (first) MMF lens (L2, L2-3) **(****FIG. 7, FIG. 8****).** The longitudinal cylindrical region (266) is longitudinally straight *i.e*. contains no reflectors, and is smaller than the MMF lens diameter. The first longitudinal cylindrical region (264) is disposed between the moveable mirror (180) and the offset reflector (184).

The first longitudinal cylindrical region (264) and the second longitudinal cylindrical region (266) are mutually parallel. The first longitudinal cylindrical region (264) and the second longitudinal cylindrical region (266) overlap at a point corresponding to the point of incidence on the moveable mirror.

The first dynamic light path (162) propagates from the scan reflecting mirror (SRM) longitudinally through the MMF lens (L3, L2-3) until it is incident with the moveable mirror (180). In other words the first dynamic light path (162) between the scan reflecting mirror (SRM) and the moveable mirror (180) is not reflected by an intervening mirror or prism. The first dynamic light path (162) may be understood to propagate within radial confines of a third longitudinal cylindrical region (262) disposed along or parallel to an optical axis of its (second) MMF lens (L3, L2-3) **(****FIG. 7, FIG. 8****).** The third longitudinal cylindrical region (262) is longitudinally straight *i.e.* contains no additional reflectors, and is smaller than the MMF lens diameter. The third longitudinal cylindrical region (262) is disposed between the moveable mirror (180) and the scan reflecting mirror (SRM).

The second dynamic light path (168) may propagate from the moveable mirror (180) longitudinally through the MMF lens (L3, L2-3) until it is incident with the imaging plane (154); in other words the second dynamic light path (168) between the moveable mirror (180) and the imaging plane (154) may not be reflected by an intervening mirror or prism. The second dynamic light path (168) may be understood to propagate within radial confines of a fourth longitudinal cylindrical region (268) disposed along or parallel to an optical axis of its (second) MMF lens (L3, L2-3) **(****FIG. 7, FIG. 8****).** The fourth longitudinal cylindrical region (268) is longitudinally straight *i.e.* contains no reflectors, and is smaller than the MMF lens diameter. The fourth longitudinal cylindrical region (268) is preferably disposed between the moveable mirror (180) and the imaging plane (154).

The third dynamic light path (134) propagates from the moveable mirror (180) longitudinally through the MMF lens (L3, L2-3) until it is incident with the scan reflecting mirror (SRM). In other words the third dynamic light path (134) between the moveable mirror (180) and the scan reflecting mirror (SRM) is not reflected by an intervening mirror or prism. The third dynamic light path (134) may be understood to propagate within radial confines of a third longitudinal cylindrical region (262) disposed along or parallel to an optical axis of its (second) MMF lens (L3, L2-3) **(****FIG. 7**, **8**). The third longitudinal cylindrical region (262) is longitudinally straight *i.e.* contains no additional reflectors, and is smaller than the MMF lens diameter. The third longitudinal cylindrical region (262) is disposed between the moveable mirror (180) and the scan reflecting mirror (SRM).

The third longitudinal cylindrical region (262) and the fourth longitudinal cylindrical region (268) are mutually parallel. The third longitudinal cylindrical region (262) and the fourth longitudinal cylindrical region (268) overlap at a point corresponding to the point of incidence on the moveable mirror.

Where there is only 1 MMF lens, the first dynamic light path (162), the first static light path (164), the second static light path (166), the second dynamic light path (168), third static light path (132), third dynamic light path (134), all propagate longitudinally.

Where there are only 2 MMF lenses, the first static light path (164), the second static light path (166) and the third static light path (132), all propagate longitudinally, and the first dynamic light path (162), the second dynamic light (168), the third dynamic light path (134), all propagate longitudinally. The first static light path (164), the second static light path (166), third static light path (132), are preferably all offset from the central optical axis of its MMF lens (L2). The first dynamic light path (162), the second dynamic light (168), third dynamic light path (134), are preferably all offset from the central optical axis of its MMF lens (L3).

The present re-scan system (100) may be understood to have different scanning, de-scanning and re-scanning light paths, each path propagating longitudinally.

An "IL path to be scanned" (132) may be understood to be a part of the IL optical path (132) propagating in a direction towards the moveable mirror (180) from the light source. It passes through the MMF lens, and then is reflected by the moveable mirror (180), along a scanning IL path (134), towards the sample (190). It is static (third static light path (132)). The IL path to be scanned (132) may be understood to propagate within the radial confines of the first longitudinal cylindrical region (264) disposed along or parallel to an optical axis of its MMF lens (L2, L2-3).

A "scanning IL path" (134) may be understood to be a part of the IL optical path (132) propagating in a direction away the moveable mirror (180). It a reflection of the IL path to be scanned (132) caused by the moveable mirror (180). After being reflected by the moveable mirror (180) it passes through the MMF lens. It is further directed towards the sample (190). It is dynamic (third dynamic light path (134)). The scanning IL path (134) may be understood to propagate within the radial confines of the third longitudinal cylindrical region (262) disposed along or parallel to an optical axis of its MMF lens (L3, L2-3).

A "scanned SL path" (162) may be understood to be a part of the SL optical path (161) propagating in a direction towards the moveable mirror (180) from the sample (190). It passes through the MMF lens, and then is reflected by the moveable mirror (180), along a de-scanned SL path (164). It is dynamic (first dynamic light path (162)). The scanned SL path (162) may be understood to propagate within radial confines of a third longitudinal cylindrical region (262) disposed along or parallel to an optical axis of its MMF lens (L3, L2-3).

A "de-scanned SL path" (164) may be understood to be a part of the SL optical path (161) propagating in a direction away from the moveable mirror (180). It is a reflection of the scanned SL path (162) caused by the moveable mirror (180). After being reflected by the moveable mirror (180) it passes through the MMF lens towards the offset reflector (184). It is static (first static light path (164)). The de-scanned SL path (164) may be understood to propagate within radial confines of a first longitudinal cylindrical region (264) disposed along or parallel to an optical axis of its MMF lens (L2, L2-3).

A "SL path to be re-scanned" (166) may be understood to be a part of the SL optical path (161) propagating in a direction toward the moveable mirror (180). It is a reflection of the de-scanned SL path (164) caused by the offset reflector (184). It passes through the MMF lens, and then is reflected by the moveable mirror (180), along a re-scanning SL path (168). It is static (second static light path (166)). The SL path to be re-scanned (166) may be understood to propagate within radial confines of a second longitudinal cylindrical region (266) disposed along or parallel to an optical axis of its MMF lens (L2, L2-3).

A "re-scanning SL path" (168) may be understood to be a part of the SL optical path (161) propagating in a direction away from the moveable mirror (180). It is a reflection of the SL path to be re-scanned (166) caused by the moveable mirror (180). After being reflected by the moveable mirror (180) it passes through the MMF lens towards the offset reflector (184). It is dynamic (second dynamic light (168)). The re-scanning SL path (168) may be understood to propagate within radial confines of a fourth longitudinal cylindrical region (268) disposed along or parallel to an optical axis of its MMF lens (L3, L2-3).

The IL path to be scanned (132) and the de-scanned SL path (164) follow the same path, but propagate in opposite directions. The scanning IL path (134) and the scanned SL path (162) follow the same path, but propagate in opposite directions.

Where there is only 1 MMF lens, the IL path to be scanned (132), the scanning IL path (134), the scanned SL path (162), the de-scanned SL path (164), the SL path to be re-scanned (166), the re-scanning SL path (168), all mainly propagate longitudinally.

Where there are only 2 MMF lenses, the IL path to be scanned (132), the de-scanned SL path (164), the SL path to be re-scanned (166) all propagating longitudinally, and the scanning IL path (134), the scanned SL path (162), the re-scanning SL path (168), all propagate longitudinally.

The present re-scan system (100) may be understood to have three IL incident light paths (132a, 162a, 166a),
- one being a part of the IL optical path (131), and two being a part of the SL optical path (161), and
- each being incident with the moveable mirror (180), and
- each being a part of the IL optical path (131) or SL optical path (161) (and limited) between the moveable mirror (180) and the MMF lens.

The present re-scan system (100) may be understood to have three reflected light paths (134a, 164a, 168a),
- one being a part of the IL optical path (131), and two being a part of the SL optical path (161), and
- each being a reflection generated by the moveable mirror (180), and
- each being a part of the IL optical path (131) or SL optical path (161), (and limited) between the moveable mirror (180) and the MMF lens.

An IL incident light path (132a) (from the light source (136)) is reflected by the moveable mirror (180) along an IL reflected light path (134a) (for scanning over and/or through the sample (190)).

The IL incident light path (132a) may be understood to be a part of the IL optical path (131) propagating in a direction towards the moveable mirror (180) from the light source. In particular, it is a part of the IL path to be scanned (132) or third static light path (132), located between the moveable mirror (180) and the MMF lens. The IL incident light path (132) is devoid of additional reflectors (mirrors, prisms); in addition to the MMF lens, it may contain one or more further lenses or lens groups.

The IL reflected light path (134a) may be understood to be a part of the IL optical path (131) propagating in a direction away the moveable mirror (180) towards the sample (190). In particular, it is a part of the scanning IL path (134) or third dynamic light path (134), located between the moveable mirror (180) and the MMF lens. It is a reflection of the IL incident light path (132a) caused by the moveable mirror (180). After being reflected by the moveable mirror (180) it passes through the MMF lens towards the towards the sample (190). The IL reflected light path (134) is devoid of additional reflectors (mirrors, prisms); in addition to the MMF lens, it may contain one or more further lenses or lens groups.

A SL first incident light path (162a) is reflected by the moveable mirror (180) along a SL first reflected light path (164a).

A SL-first incident light path (162a) may be understood to be a part of the SL optical path (161) propagating in a direction towards the moveable mirror (180) from the sample. In particular, it is a part of the scanned SL path (162) or first dynamic light path (162), located between the moveable mirror (180) and the MMF lens. The SL first incident light path (162a) is devoid of additional reflectors (mirrors, prisms); in addition to the MMF lens, it may contain one or more further lenses or lens groups.

A SL first reflected light path (164a) may be understood to be a part of the SL optical path (161) propagating in a direction away from the moveable mirror (180). In particular, it is a part of the de-scanned SL path (164) or first static light path (164), located between the moveable mirror (180) and the MMF lens. It a reflection of the SL first incident light path (162a) caused by the moveable mirror (180). After being reflected by the moveable mirror (180) it passes through the MMF lens towards the offset reflector (184). The SL first reflected light path (164a) is devoid of additional reflectors (mirrors, prisms); in addition to the MMF lens, it may contain one or more further lenses or lens groups.

A SL second incident path (166a) is reflected by the moveable mirror (180) along a SL second reflected light path (168a) (towards the imaging plane (154)).

The SL second incident path (166a) may be understood to be a part of the SL optical path (161) propagating in a direction towards the moveable mirror (180) from the offset reflector (184). In particular, it is a part of the SL path to be re-scanned (166) or second static light path (166), located between the moveable mirror (180) and the MMF lens. The SL second incident path (166a) is devoid of additional reflectors (mirrors, prisms); in addition to the MMF lens, it may contain one or more further lenses or lens groups.

The SL second reflected light path (168a) may be understood to be a part of the SL optical path (161) propagating in a direction away the moveable mirror (180). In particular, it is a part of the re-scanning SL path (168) or second dynamic light (168), located between the moveable mirror (180) and the MMF lens. It a reflection of the SL second incident path (166a) caused by the moveable mirror (180). After being reflected by the moveable mirror (180) it passes through the MMF lens towards the imaging plane (154). The SL second reflected light path (168a) is devoid of additional reflectors (mirrors, prisms); in addition to the MMF lens, it may contain one or more further lenses or lens groups.

The system (100) further comprises an illumination optical system configured for directing, and optionally focusing, illumination light, IL, at the sample (190). The illumination optical system thereby provides the IL pattern (126) at the sample (190), the IL pattern (126) causing the sample light, SL. Illumination light, IL, is generated by a light source. The light source may or may not be a part of the system (100).

IL (130) from an IL source (136) is directed along the third static light path (132). Since the third static light path (132) and the first static light path (164) follow the same path, a dichroic mirror is used to separate the IL from the SL. Accordingly, the system (100) further comprises a dichroic mirror (186a, 186b).

In an example **(****FIG. 4B****),** IL (130) from the IL source (136) is directed, by reflection by the dichroic mirror (186a), along the third static light path (132), and towards the moveable mirror (180). The angle of reflection by the dichroic mirror (186a) may be 80 to 100 deg. The first static light path (164) and the second static light path (166) both pass through the dichroic mirror (186a).

In an example **(****FIG. 5B****),** IL (130) from the IL source (136) passes through the dichroic mirror (186b), along the third static light path (132), and towards the moveable mirror (180). The first static light path (164) is directed, by reflection by the dichroic mirror (186b) acting as an offset reflector (184), along the second static light path (166). The angle of reflection by dichroic mirror (186a) may be -10 to +10 deg.

Apart from the moveable mirror (180) and MMF lens(es), IL (130) may be directed using one or more reflectors (*e.g.* mirror, prism). IL may be further focused using one or more lenses or lens groups.

The system (100) further comprises a detection optical system configured for directing, and optionally focusing, sample light, SL, to the imaging plane (154). The detection optical system thereby provides the SL pattern (152) on the imaging plane (154).

SL (dynamic) for de-scanning propagates from the sample towards the moveable mirror (180), and is reflected by the moveable mirror (180) thereby generating de-scanned SL (static). The de-scanned (static) SL is reflected back to the moveable mirror (180) by an offset reflector (184). Subsequently, the reflection (of the de-scanned (static) SL) by the moveable mirror (180) generates re-scanning SL (dynamic) for re-scanning of the SL pattern (152) on the imaging plane (154).

The imaging plane (154) may be a part of an imaging system (156). The imaging system (156) may or may not be a part of the system (100). The imaging system (156) for example comprises a camera, such as a CCD camera. The imaging plane preferably comprises a plurality of pixels that are arranged in a predefined manner, *e.g.* in a 2D lattice.

Apart from the moveable mirror (180) and MMF lens(es), SL may be further directed using one or more reflectors (*e.g.* mirror, prism). IL may be focused using one or more lenses or lens groups. Examples include the re-scanning lens group (L4/L5) described elsewhere herein.

The system (100) comprises (only) one (L2-3) or (only) two (L2, L3) MMF lenses. When there are two MMF lenses (L2, L3), their optical axes are divergent. By "MMF lens" it is meant a single lens or a lens group. In a lens group, multiple lenses are present (*e.g*. to correct for optical distortions) that have a combined effect of the single lens. In a lens group, the optical axes of the multiple lenses are preferably co-axial. However, it cannot be excluded that at least one lens is non-coaxial.

An MMF lens (L2, L3, L2-3) is a static (stationary) lens separated from the moveable mirror (180) by its focal length. Each MMF lens is a converging (positive) lens.

An MMF lens is configured for focusing light propagating towards the moveable mirror, onto the moveable mirror (180). An MMF lens is configured for focusing light propagating towards the moveable mirror, onto a point (region) of incidence on the moveable mirror (180). An MMF lens is configured for collimating light propagating away from the moveable mirror that was focused at the point of incidence.

There are typically no additional optical elements between the MMF lens (L2, L3, L2-3) and the movable moveable mirror (180).

The IL incident light path (132), the SL second light incident path (166), and the SL first incident light path (162), are focused by the one or two MMF lenses (L2, or L3 or combined L2-3) to a common point or region of incidence on the moveable mirror (180).

A first group of light paths comprises the IL incident light path (132a), the SL first reflected light path (164a) and the SL second incident paths (166a). A second group of light paths comprises the IL reflected light path (134a), the SL first incident light path (162a), and the SL second reflected light path (168a). The first group and the second group of light paths pass through the one (L2-3) or two (L2, or L3) MMF lenses.

According to one aspect:
- the first group of light paths passes through a first (single) MMF lens (L2) separated from the moveable mirror (180) by its focal length, and
- the second group of light paths passes through a second (single) MMF lens (L3), different from the first MMF lens (L2), separated from the moveable mirror (180) by its focal length.

According to another aspect both the first group of light paths and the second group of light paths pass through a (single) MMF lens (L2-3) separated from the moveable mirror (180) by its focal length.

According to one aspect:
the light paths incident or reflected by the moveable mirror (180) and which are static may pass through the one MMF lens (L2), and
the light paths incident or reflected by the moveable mirror (180) and which are dynamic may pass through a different MMF lens (L3).

Using one or two MMF lens simplifies optical design.

By channelling the all light paths incident with (132a, 162a, 166a) or reflected by (134a, 164a, 168a) by the movable moveable mirror (180) such that they pass through only one (L2-3) or two (L2, L3) MMF lenses, the design of the system is simplified. In particular, the arrangement has an effect that at least two image axes are within the same MMF lenses (L2, L3, L2-3), which reduces number of lenses, increases stability, increases compactness, leads to lower cost, and reduces the number of degrees of freedom that need alignment.

When one MMF lens (L2-3) is employed, a result is less optical components (leading to reductions in cost and footprint, and improvements in stability). The angles of the light on the moveable mirror (180) are less oblique, thereby reducing demands on moveable mirror (180) and needs for optical coatings.

The instrument further produces a two dimensional (2D) image representing a plane in a three dimensional (2D) image. Multiple different planes are recorded by moving the focal plane of the objective relative to the sample by changing the distance between sample and objective (e.g. moving either the sample or the objective). Processing of the multiple 2D image planes allows reconstruction of a 3D image.

The movable mirror (180) is a movable reflector configured to reflect the illumination light and the sample light. It may be incorporated into a scanner, for instance into any suitable scanner such as a resonant scanner, galvanometric scanner, polygon scanner. The movable mirror (180) may be movable in the sense that it can rotate around an axis of rotation.

The movable mirror (180) acts as a scanner, configured to scan an illumination light, IL (130), as an IL pattern (126) over and/or through the sample (190),

The movable mirror (180) also acts as a de-scanner, configured to de-scan sample light, SL, from the sample (190), the SL caused by the IL pattern (126), and

The movable mirror (180) also acts a re-scanner, configured to re-scan the de-scanned SL as an SL pattern (152) over an imaging plane (154) of an imaging system (156).

According to claim 1 one and the same reflective surface performs the scanning, de-scanning and re-scanning. The movable mirror (180) may be understood to be configured to scan the IL pattern (126) over and/or through the sample and simultaneously de-scan the sample light from the sample (190), and simultaneously re-scan the SL light pattern (152) over said imaging plane

(154) of the imaging system (156). Of course, as used herein, if two events, such as scanning the IL pattern (126) and re-scanning the SL pattern (152) are said to be simultaneous it is understood they may occur shortly after one another due to the non-infinite speed of light and for example due to photo-excited molecules in the sample remaining excited for some time before they decay and emit a photon. This is for example the case with scanning and re-scanning because the sample light has to travel from sample *via* the static and dynamic paths to the moveable mirror (180).

The angle of incidence of the static light paths (132a, 166a) with the moveable mirror (180) may be within a range 1 to 45 degrees, preferably 2 to 20 degrees.

The angle of incidence of the (static) IL incident light path (132a) with the moveable mirror (180) may be 2 to 35 deg, when there is only one MMF lens. The angle of incidence of the (static) IL incident light path (132a) with the moveable mirror (180) may be 6 to 45 deg, when there are two MMF lenses.

The angle of incidence of the (static) SL second incident path (166a) with the moveable mirror (180) may be 1 to 34 deg, when there is only one MMF lens. The angle of incidence of the (static) SL second incident path (166a) with the moveable mirror (180) may be 5 to 44 deg, when there are two MMF lenses.

The angle of reflection of the (static) SL first reflected light path (164a) with the moveable mirror (180) may be 2 to 35 deg, when there is only one MMF lens. The angle of incidence of the (static) SL first reflected light path (164a) with the moveable mirror (180) may be 6 to 45 deg, when there are two MMF lenses.

The angle of incidence of the (static) IL incident light path (132a) with the moveable mirror (180) and the angle of reflection of the (static) SL first reflected light path (164a) with the moveable mirror (180) are preferably the same, and, for a given system (100), are both greater than the angle of incidence of the (static) SL second incident path (166a) with the moveable mirror (180).

De-scanned SL (along a de-scanned SL path (164)) propagating away from the moveable mirror (180) is returned (along SL path to be re-scanned (166)) by reflection back to the moveable mirror (180) by an offset reflector (184). The system hence comprises an offset reflector (138). The value of the offset is selected such that this returned (de-scanned) SL (*e.g*. along SL path 166) is able to pass through the same MMF lens as the aforementioned de-scanned SL (*e.g.* along SL path 164) propagating away from the moveable mirror (180). The angle of incidence/reflection on the offset reflector (184) may be 1 to 45 degrees, preferably 2 to 20 degrees.

The offset reflector (184) may be a back mirror (185) or retro reflector (*e.g*. **FIG. 4A****/****B****)** positioned behind a dichroic mirror (186a). The offset reflector (184) may be a dichroic mirror (186b) (*e.g.* **FIG. 5A****/****B****).**

The system may comprise a dichroic mirror (186a, 186b). The dichroic mirror (186a, 186b) is configured to separate the IL (130) from the SL (160). The separation of light is based on the difference in wavelength between the IL (130) and the SL (160). The dichroic mirror preferably has a reflective side and an opposing anti-reflective side. Depending on the configuration, the dichroic mirror may be configured to reflect light within a certain wavelength band (*e.g*. reflect IL (130) or reflect SL (160)) and to transmit (let pass) light not within the certain wavelength band (*e.g.* transmit SL (160) or transmit IL (130) respectively). Further, the dichroic mirror may be optimised to reflect light within the certain wavelength band when it is incident thereto within a limited range (*e.g.* -10 to 10 deg, 30-150 deg, or 80 to 100 deg).

The wavelength's that are reflected and transmitted are readily adapted according to the sample type and set up. As an example, a dichroic mirror may have 4 reflection bands (±10nm) centred around 405, 488, 561 and 640nm. Such as dichroic mirror is useful for fluorescence imaging.

Examples of commercially available dichroic mirrors include Semrock Di03-R488-t1 and Chroma ZT405/488/561/640rpcv2.

The dichroic mirror (186a) may be configured to reflect the IL (130) towards the sample and let pass the SL (160). For instance, the dichroic mirror (186a) may be configured to direct by reflection on its reflective side at 80 to 100 deg, IL from the light source (136) along the third static light path (132); and further to transmit the first static light path (164) through its reflective side and to transmit the second static light path (166) through its non-reflective side **(****FIG. 4A****/****B****).**

Alternatively, the dichroic mirror (186b) may be configured to reflect the SL (160) and transmit the IL (130). For instance, the dichroic mirror (186b) may be configured to transmit IL from the light source (136) through its non-reflective side along third static light path (132); and further to direct the first static light path (164) by reflection on its reflective side at -10 to +10 deg along the second static light path (166) **(****FIG. 5A****/****B****).**

Preferably, the dichroic mirror (186a, 186b) is positioned within (so as to reflect/transmit) the static light paths (132, 164, 166).

In an embodiment, the SL path (161) is provided with an optical slit (S). Exemplary optical slits are shown, for instance, in **FIGs. 3A** to **5B****.** The optical slit (SL) is configured to reject out-of-focus light (light emanating from the sample at a different depth) in the SL path. In other words, the optical slit is preferably configured to block SL (160) coming from regions in the sample that are not in focus. This improves the optical sectioning (Z-sectioning) capabilities of the system.

Preferably the static SL light path (166), more in particular the second static light path (166), is provided with the optical slit (S). Preferably the optical slit (S) is provided between the MMF lens and the offset reflector (184).

The size (width height) of the optical slit (S) in general depends on the choice of objective (O), tube lens (TL), MMF lens (L2, L3, L2-3). As general guidance, a width of the optical slit may be between 1µm to 200µm, preferably between 5 µm and 20 µm. As general guidance, a height of the optical slit may be 0.1 to 20 mm, preferably 1 to 5 mm.

Optionally, the re-scan system comprises a light source, for example a light source as described herein. Optionally, the re-scan optical system comprises a microscope system, for example a microscope system as described herein. In particular the microscope system may be a confocal microscope system. Optionally, the re-scan optical system comprises an imaging system, for example an imaging system as described herein.

The system may further comprise an offset reflector focusing, ORF, lens (L1). The static light paths (164, 166 and 132) may all pass through the ORF lens (L1). Preferably, none of the dynamic light paths (162, 168 and 134) pass through the ORF lens (L1). The ORF lens (L1) focuses light from the first static light path (164) onto the offset reflector (184). The ORF lens (L1) collimates light reflected by the offset reflector (184) along the second static light path (166). The ORF lens (L1) works with the offset reflector (184) to achieve the transition from 164 to 166. The ORF lens (L1) also serves to refocus the SL onto the slit (S). The central optical axis of the ORF lens (L1) is preferably aligned with the central optical axis of the MMF lenses (L2). ORF lens (L1) is preferably a single achromatic lens or lens group configured for field curvature compensation.

The system may further comprise one or more additional lenses or lens groups for focusing re-scanning SL as a SL pattern (152) onto the imaging plane (154). This may be known as a re-scanning lens group (L4/L5). Each re-scanning lens (L4 or L5) is preferably a single achromatic lens. Lenses in the re-scanning lens group (L4/L5) are preferably mutually aligned along their central optical axes. The re-scanning lens group (L4/L5) serves to relay the image onto the imaging plane (154). The re-scanning lens group (L4/L5) may be used to adjust the magnification of the formed image on the imaging plane (154).

The system (100) may further comprise an objective (O).

The objective (O) is configured to focus the IL (130) onto sample herewith causing an IL pattern on or in the sample. The objective (O) is further configured to capture the SL (160) coming from the sample.

The moveable mirror (180) scans the IL (130) into the objective (O), which focuses the illumination light onto a sample. Returning SL (160) from the sample passes through the objective (O).

The system (100) may further comprise a tube lens (TL). The moveable mirror (180) scans the IL (130) through the tube lens (TL), which subsequently passes through the objective, which focuses the illumination light onto a sample. Returning SL (160) from the sample passes through the objective (O) and subsequently the tube lens (TL). The tube lens may be static. Each microscope may have a different focal length for the tube lens. The distance between the intermediate image plane and the tube lens is preferably equal to the focal distance of the tube lens.

The system (100) may further comprise an scan-reflecting mirror (SRM). The scan-reflecting mirror (SRM) directs IL (130) and SL (160) between the moveable mirror (180) and the sample (190). In particular it directs IL (130) and SL (160) between the moveable mirror (180) and the tube lens (TL) and/or objective (O). The scan-reflecting mirror (SRM) is preferably a right-angle mirror. The scan-reflecting mirror (SRM) is preferably static. It is understood that other optical elements (e.g. reflector, lenses, lens groups) may be disposed between SRM and sample).

The system (100) may comprise a light source (136) that is configured to generate the IL (160). However, it should be appreciated that the system may not necessarily not *per se* comprise the light source. The system may comprise means for receiving IL (160), such as an input connection for an optical fibre that provides the IL (160). The light source (136) may be a laser, such as a solid state laser or diode laser. The light source (136) may comprise a collimator that is configured to make a parallel beam with a relatively large diameter, wherein preferably the cross section of the beam has a uniform intensity distribution. The collimator may comprise one or more negative lenses and one or more positive lenses to generate an expanded, collimated beam. The light-source may in addition or alternatively contain cylindrical lenses and/or Powell lenses to achieve an optimal illumination profile.

Provided here is a method for obtaining an image of a sample, comprising providing the system (100) described herein, and using it to obtain the image.

**FIGs. 4A** and **4B** exemplarily illustrate respectively SL optical paths (161) and IL optical paths (131) of a re-scan optical system (100), *e.g.* a re-scan microscope system, for forming an image of a sample (190). This optical system (100) comprises a light source (136) that is configured to generate IL (160). However, it should be appreciated that the re-scan optical system may not necessarily not *per se* comprise the light source as mentioned elsewhere herein.

The IL (160) reflects from dichroic mirror (186a) and propagates along the third static light path (132), passing through the ORF lens (L1), an optical slit (S), and the first MMF lens (L2), and then is incident with the moveable mirror (180).

The moveable mirror (180) reflects the third static light path (132) along a third dynamic light path (134). The third dynamic light path (134) passes through second MMF lens (L3), and then is directed by the scan-reflecting mirror (SRM), where it passes through the tube lens (TL) and objective (O) which focuses the IL (130) onto or into the sample (190).

The objective (O) is configured to focus the IL (130) onto sample herewith causing an IL pattern on or in the sample. The IL pattern causes SL (160) from the sample (190). The objective (O) is configured to capture the SL (160) coming from the sample. On the way back, from the objective (O) up to the offset reflector (184), the SL (160) travels along the same path as the IL (130) travels on its way to the sample (190). In other words, from objective (O) to offset reflector (184), the SL path (161) is substantially identical to the IL path (131).

The SL (160) from the objective (O) is reflected by scan-reflecting mirror (SRM), where it joins the first dynamic light path (162). The first dynamic light path (162) passes through the second MMF lens (L3), and then is incident with the moveable mirror (180).

The moveable mirror (180) reflects the first dynamic light path (162) along a first static light path (164). The first static light path (164) passes through (in order) the first MMF lens (L2), the ORF lens (L1), the dichroic mirror (186a) and then is incident with the offset reflector (184).

The offset reflector (184) reflects the first static light path (164) along a second static light path (166). The first static light path (164) passes through (in order) the dichroic mirror (186a), the ORF lens (L1), the first MMF lens (L2), and then is incident with the moveable mirror (180).

The moveable mirror (180) reflects the first static light path (164) along a second dynamic light path (168). The second dynamic light path (168) passes through (in order) the second MMF lens (L3), re-scanning lens group (L4/L5), and then is incident with the imaging plane.

As general guidance, for an exemplary implementation, the lenses (TL, L1 to L5) may each have a diameter of 25.4mm (1 inch); TL may have a focal length of 140mm; L1 may be a lens group with combined focal length of 120mm; L2 may have a focal length of 100mm; L3 may have a focal length of 150mm; L4 may have a focal length of 75mm; L5 may have a focal length of 100mm; the objective (O) may have a numerical aperture (NA) of 1.2 with a 3 mm focal length.

**FIGs. 5A** and **5B** exemplarily illustrate an alternative configuration to **FIGs. 4A** and **4B****.** **FIGs. 5A** and **5B** are similar to **FIGs. 4A** and **4B** except the dichroic mirror (186b) acts as the offset reflector (184) reflecting the first static light path (164) along a second static light path (166). Further, SL (160) is introduced along the third static light path (132) through the dichroic mirror (186b).

## Claims

1. A re-scan optical system (100) for obtaining an image of a sample (190) comprising:
- a moveable mirror (180) configured for:
- scanning an illumination light, IL (130), as an IL pattern (126) over and/or through the sample (190),
- de-scanning sample light, SL (160), from the sample (190), the SL (160) caused by the IL pattern (126), and
- re-scanning the de-scanned SL as an SL pattern (152) over an imaging plane (154) of an imaging system (156),
wherein
light paths incident with (132a, 162a, 166a) or reflected by (134a, 164a, 168a) the moveable mirror (180) pass through one (L2-3) or two (L2, L3) moveable mirror focusing, MMF, lenses, wherein an MMF lens (L2, L3, L2-3) is a lens or lens group separated from the moveable mirror (180) by its focal length, **characterized in that** one and the same reflective surface of the moveable mirror (180) performs the scanning, de-scanning and re-scanning.

2. The re-scan optical system (100) according to claim 1, wherein:
- the IL (130) propagates along an IL optical path (131) and the SL (160) propagates along an SL optical path (161)
- a part of the IL optical path (131) propagates along an IL incident light path (132a) and is reflected by the moveable mirror (180) along an IL reflected light path (134a) for scanning Illumination light over and/or through the sample (190)),
- a part of the SL optical path (161) propagates along a SL first incident light path (162a) and is reflected by the moveable mirror (180) along a SL first reflected light path (164a) thereby de-scanning the SL, and
- a part of the SL optical path (161) propagates along a SL second incident path (166a) and is reflected by the moveable mirror (180) along a SL second reflected light path (168a) thereby re-scanning the SL towards the imaging plane (154),
wherein
- a first group of light paths comprises the IL incident light path (132a), the SL first reflected light path (164a) and the SL second incident paths (166a),
- a second group of light paths comprises the IL reflected light path (134a), the SL first incident light path (162a), and the SL second reflected light path (168a), and
- the first group and the second group of light paths pass through the one (L2-3) or two (L2, or L3) MMF lenses.

3. The re-scan optical system (100) according to claim 2, wherein:
- the first group of light paths pass through one of the two MMF lenses, a first MMF lens (L2), separated from the moveable mirror (180) by its focal length, and
- the second group of light paths passes the other of the two MMF lenses, a second (separate) MMF lens (L3), different from the first MMF lens (L2), separated from the moveable mirror (180) by its focal length.

4. The re-scan optical system (100) according to claim 2, wherein:
both the first group of light paths and the second group of light paths pass both through the (only) one MMF lens (L2-3) separated from the moveable mirror (180) by its focal length.

5. The re-scan optical system (100) according to any one of claims 2 to 4, further comprising an offset reflector (184), wherein:
- the SL first reflected light path (164a) is a part of a first static light path (164) propagating de-scanned SL from the sample (190) ,
- the first static light path (164) is reflected back towards the moveable mirror (180) by the offset reflector (184) along a second static light path (166), wherein the first static light path (164) is offset from the second static light path (166),
- the second static light path (166) passes through the same MMF lens (L2, L3, L2-3) and is incident with the moveable mirror (180) along the SL second incident path (166a).

6. The re-scan optical system (100) according to claim 5 wherein:
- the offset reflector (184) is a back mirror (184),
- a dichroic mirror (186a) is provided in the first static light path (164) and the second static light path (166), and
- the first static light path (164) passes through the dichroic mirror (186a), is reflected by the back mirror (184) along the second static light path (166) and through the dichroic mirror (186a).

7. The re-scan optical system (100) according to claim 5 wherein
- the offset reflector (184) is a retroreflector,
- a dichroic mirror (186a) is provided in the first static light path (164) and the second static light path (166), and
- the first static light path (164) passes through the dichroic mirror (186a), is reflected by the retroreflector along the second static light path (166) and through the dichroic mirror (186a).

8. The re-scan optical system (100) according to claim 5 wherein the offset reflector is a dichroic mirror (186b), and IL incident light path (132) passes through the dichroic mirror (186b).

9. The re-scan optical system (100) according to any one of claims 2 to 8, further comprising an optical slit (S), wherein the first static light path (164) and second static light path (166) pass through the optical slit (S).

10. The re-scan optical system (100) according to any one of claims 2 to 8, wherein an angle of incidence of the IL incident light path (132a) with the moveable mirror (180) and an angle of reflection of the SL first reflected light path (164a) with the moveable mirror (180) are the same, and, are both greater than an angle of incidence of the SL second incident path (166a) with the moveable mirror (180).

11. A confocal microscope incorporating the re-scan optical system (100) according to any one of claims 1 to 10.

## Patentansprüche

1. Optisches Rescan-System (100) zum Erhalten eines Bildes einer Probe (190), das Folgendes umfasst:
- einen beweglichen Spiegel (180), der zu Folgendem konfiguriert ist:
- Scannen eines Beleuchtungslichts, IL (130), als ein IL-Muster (126) über und/oder durch die Probe (190),
- Descannen von Probenlicht, SL (160), von der Probe (190), wobei das SL (160) durch das IL-Muster (126) verursacht wird, und
- Rescannen des descannten SL als ein SL-Muster (152) über eine Bildgebungsebene (154) eines Bildgebungssystems (156),
wobei
Lichtpfade, die einfallen auf (132a, 162a, 166a) oder reflektiert werden durch (134a, 164a, 168a) den beweglichen Spiegel (180), durch eine (L2-3) oder zwei (L2, L3) Beweglicher-Spiegel-Fokussierung- bzw. MMF(Moveable Mirror Focusing)-Linsen verlaufen, wobei eine MMF-Linse (L2, L3, L2-3) eine Linse oder Linsengruppe ist, die um ihre Brennweite von dem beweglichen Spiegel (180) separiert ist, **dadurch gekennzeichnet, dass**
ein und dieselbe reflektierende Oberfläche des beweglichen Spiegels (180) das Scannen, Descannen und Rescannen durchführt.

2. Optisches Rescan-System (100) nach Anspruch 1, wobei:
- das IL (130) entlang eines optischen IL-Pfades (131) propagiert und das SL (160) entlang eines optischen SL-Pfades (161) propagiert,
- ein Teil des optischen IL-Pfades (131) entlang eines IL-Einfallslichtpfads (132a) propagiert und durch den beweglichen Spiegel (180) entlang eines IL-Reflexionslichtpfads (134a) zum Scannen von Beleuchtungslicht über und/oder durch die Probe (190) reflektiert wird,
- ein Teil des optischen SL-Pfades (161) entlang eines ersten SL-Einfallslichtpfades (162a) propagiert und durch den beweglichen Spiegel (180) entlang eines ersten SL-Reflexionslichtpfades (164a) reflektiert wird, wodurch ein Descannen des SL erfolgt, und
- ein Teil des optischen SL-Pfades (161) entlang eines zweiten SL-Einfallspfades (166a) propagiert und durch den beweglichen Spiegel (180) entlang eines zweiten SL-Reflexionslichtpfades (168a) reflektiert wird, wodurch ein Rescannen des SL zu der Bildgebungsebene (154) hin erfolgt,
wobei
- eine erste Gruppe von Lichtpfaden den IL-Einfallslichtpfad (132a), den ersten SL-Reflexionslichtpfad (164a) und die zweiten SL-Einfallspfade (166a) umfasst,
- eine zweite Gruppe von Lichtpfaden den IL-Reflexionslichtpfad (134a), den ersten SL-Einfallslichtpfad (162a) und den zweiten SL-Reflexionslichtpfad (168a) umfasst, und
- die erste Gruppe und die zweite Gruppe von Lichtpfaden durch die eine (L2-3) oder zwei (L2 oder L3) MMF-Linsen verlaufen.

3. Optisches Rescan-System (100) nach Anspruch 2, wobei:
- die erste Gruppe von Lichtpfaden durch eine der zwei MMF-Linsen, eine erste MMF-Linse (L2), die um ihre Brennweite von dem beweglichen Spiegel (180) separiert ist, verläuft, und
- die zweite Gruppe von Lichtpfaden durch die andere der beiden MMF-Linsen, eine zweite (separate) MMF-Linse (L3), die sich von der ersten MMF-Linse (L2) unterscheidet und um ihre Brennweite von dem beweglichen Spiegel (180) separiert ist, verläuft.

4. Optisches Rescan-System (100) nach Anspruch 2, wobei:
sowohl die erste Gruppe von Lichtpfaden als auch die zweite Gruppe von Lichtpfaden beide durch die (einzige) eine MMF-Linse (L2-3) verlaufen, die um ihre Brennweite von dem beweglichen Spiegel (180) separiert ist.

5. Optisches Rescan-System (100) nach einem der Ansprüche 2 bis 4, das ferner einen Versatzreflektor (184) umfasst, wobei:
- der erste SL-Reflexionslichtpfad (164a) ein Teil eines ersten statischen Lichtpfades (164) ist, auf dem descanntes SL von der Probe (190) propagiert,
- der erste statische Lichtpfad (164) durch den Versatzreflektor (184) entlang eines zweiten statischen Lichtpfads (166) zurück zu dem beweglichen Spiegel (180) hin reflektiert wird, wobei der erste statische Lichtpfad (164) von dem zweiten statischen Lichtpfad (166) versetzt ist,
- der zweite statische Lichtpfad (166) durch dieselbe MMF-Linse (L2, L3, L2-3) verläuft und auf den beweglichen Spiegel (180) entlang des zweiten SL-Einfallspfades (166a) einfällt.

6. Optisches Rescan-System (100) nach Anspruch 5, wobei:
- der Versatzreflektor (184) ein Rückspiegel (184) ist,
- ein dichroitischer Spiegel (186a) in dem ersten statischen Lichtpfad (164) und dem zweiten statischen Lichtpfad (166) bereitgestellt ist, und
- der erste statische Lichtpfad (164) durch den dichroitischen Spiegel (186a) verläuft, durch den Rückspiegel (184) entlang des zweiten statischen Lichtpfades (166) und durch den dichroitischen Spiegel (186a) hindurch reflektiert wird.

7. Optisches Rescan-System (100) nach Anspruch 5, wobei:
- der Versatzreflektor (184) ein Retroreflektor ist,
- ein dichroitischer Spiegel (186a) in dem ersten statischen Lichtpfad (164) und dem zweiten statischen Lichtpfad (166) bereitgestellt ist, und
- der erste statische Lichtpfad (164) durch den dichroitischen Spiegel (186a) verläuft, durch den Retroreflektor entlang des zweiten statischen Lichtpfades (166) und durch den dichroitischen Spiegel (186a) hindurch reflektiert wird.

8. Optisches Rescan-System (100) nach Anspruch 5, wobei der Versatzreflektor ein dichroitischer Spiegel (186b) ist und der IL-Einfallslichtpfad (132) durch den dichroitischen Spiegel (186b) verläuft.

9. Optisches Rescan-System (100) nach einem der Ansprüche 2 bis 8, das ferner einen optischen Spalt (S) umfasst, wobei der erste statische Lichtpfad (164) und der zweite statische Lichtpfad (166) durch den optischen Spalt (S) verlaufen.

10. Optisches Rescan-System (100) nach einem der Ansprüche 2 bis 8, wobei ein Einfallswinkel des IL-Einfallslichtpfades (132a) mit dem beweglichen Spiegel (180) und ein Reflexionswinkel des ersten SL-Reflexionslichtpfades (164a) mit dem beweglichen Spiegel (180) gleich sind und beide größer als ein Einfallswinkel des zweiten SL-Einfallspfades (166a) mit dem beweglichen Spiegel (180) sind.

11. Konfokales Mikroskop, das das optische Rescan-System (100) nach einem der Ansprüche 1 bis 10 einbindet.

## Revendications

1. Système optique de rebalayage (100) destiné à obtenir une image d'un échantillon (190) comprenant :
- un miroir mobile (180) conçu pour :
- balayer une lumière d'éclairage, IL (130), selon un motif IL (126), sur et/ou à travers l'échantillon (190),
- débalayer une lumière d'échantillon, SL (160), de l'échantillon (190), la SL (160) étant induite par le motif IL (126), et
- rebalayer la SL débalayée selon un motif SL (152) sur un plan d'imagerie (154) d'un système d'imagerie (156),
dans lequel
des trajets lumineux incidents sur (132a, 162a, 166a) ou réfléchis par (134a, 164a, 168a) le miroir mobile (180) traversent une (L2-3) ou deux (L2, L3) lentilles de focalisation de miroir mobile, MMF, une lentille MMF (L2, L3, L2-3) étant une lentille ou un groupe de lentilles séparé du miroir mobile (180) par sa distance focale, **caractérisé en ce que**
une seule et même surface réfléchissante du miroir mobile (180) effectue le balayage, le débalayage et le rebalayage.

2. Système optique de rebalayage (100) selon la revendication 1, dans lequel :
- l'IL (130) se propage le long d'un trajet optique IL (131) et la SL (160) se propage le long d'un trajet optique SL (161),
- une partie du trajet optique IL (131) se propage le long d'un trajet lumineux incident IL (132a) et est réfléchie par le miroir mobile (180) le long d'un trajet lumineux réfléchi IL (134a) pour balayer une lumière d'éclairage sur et/ou à travers l'échantillon (190),
- une partie du trajet optique SL (161) se propage le long d'un premier trajet lumineux incident SL (162a) et est réfléchie par le miroir mobile (180) le long d'un premier trajet lumineux réfléchi SL (164a), ce qui provoque ainsi le débalayage de la SL, et
- une partie du trajet optique SL (161) se propage le long d'un deuxième trajet incident SL (166a) et est réfléchie par le miroir mobile (180) le long d'un deuxième trajet lumineux réfléchi SL (168a), ce qui provoque ainsi le rebalayage de la SL vers le plan d'imagerie (154),
dans lequel
- un premier groupe de trajets lumineux comprend le trajet lumineux incident IL (132a), le premier trajet lumineux réfléchi SL (164a) et le deuxième trajet incident SL (166a),
- un deuxième groupe de trajets lumineux comprend le trajet lumineux réfléchi IL (134a), le premier trajet lumineux incident SL (162a) et le deuxième trajet lumineux réfléchi SL (168a), et
- le premier groupe et le deuxième groupe de trajets lumineux traversent la lentille (L2-3) ou les deux lentilles MMF (L2, ou L3).

3. Système optique de rebalayage (100) selon la revendication 2, dans lequel :
- le premier groupe de trajets lumineux traverse une des deux lentilles MMF, une première lentille MMF (L2), séparée du miroir mobile (180) par sa distance focale, et
- le deuxième groupe de trajets lumineux passe par l'autre des deux lentilles MMF, une deuxième lentille MMF (L3) (distincte), différente de la première lentille MMF (L2), séparée du miroir mobile (180) par sa distance focale.

4. Système optique de rebalayage (100) selon la revendication 2, dans lequel :
le premier groupe de trajets lumineux et le deuxième groupe de trajets lumineux traversent tous deux la (seule) lentille MMF (L2-3) séparée du miroir mobile (180) par sa distance focale.

5. Système optique de rebalayage (100) selon l'une quelconque des revendications 2 à 4, comprenant en outre un réflecteur décalé (184), dans lequel :
- le premier trajet lumineux réfléchi SL (164a) fait partie d'un premier trajet lumineux statique (164) propageant la SL débalayée depuis l'échantillon (190),
- le premier trajet lumineux statique (164) est réfléchi vers le miroir mobile (180) par le réflecteur décalé (184) le long d'un deuxième trajet lumineux statique (166), le premier trajet lumineux statique (164) étant décalé du deuxième trajet lumineux statique (166),
- le deuxième trajet lumineux statique (166) traverse la même lentille MMF (L2, L3, L2-3) et est incident sur le miroir mobile (180) le long du deuxième trajet incident SL (166a).

6. Système optique de rebalayage (100) selon la revendication 5 dans lequel :
- le réflecteur décalé (184) est un miroir arrière (184),
- un miroir dichroïque (186a) est disposé sur le premier trajet lumineux statique (164) et le deuxième trajet lumineux statique (166), et
- le premier trajet lumineux statique (164) traverse le miroir dichroïque (186a), est réfléchi par le miroir arrière (184) le long du deuxième trajet lumineux statique (166) et à travers le miroir dichroïque (186a).

7. Système optique de rebalayage (100) selon la revendication 5 dans lequel
- le réflecteur décalé (184) est un rétroréflecteur,
- un miroir dichroïque (186a) est disposé sur le premier trajet lumineux statique (164) et le deuxième trajet lumineux statique (166), et
- le premier trajet lumineux statique (164) traverse le miroir dichroïque (186a), est réfléchi par le rétroréflecteur le long du deuxième trajet lumineux statique (166) et à travers le miroir dichroïque (186a).

8. Système optique de rebalayage (100) selon la revendication 5 dans lequel le réflecteur décalé est un miroir dichroïque (186b), et le trajet lumineux incident IL (132) traverse le miroir dichroïque (186b).

9. Système optique de rebalayage (100) selon l'une quelconque des revendications 2 à 8, comprenant en outre une fente optique (S), le premier trajet lumineux statique (164) et le deuxième trajet lumineux statique (166) passant à travers la fente optique (S).

10. Système optique de rebalayage (100) selon l'une quelconque des revendications 2 à 8, dans lequel un angle d'incidence du trajet lumineux incident IL (132a) sur le miroir mobile (180) et un angle de réflexion du premier trajet lumineux réfléchi SL (164a) par le miroir mobile (180) sont identiques, et sont tous deux supérieurs à un angle d'incidence du deuxième trajet incident SL (166a) sur le miroir mobile (180).

11. Microscope confocal intégrant le système optique de rebalayage (100) selon l'une quelconque des revendications 1 à 10.
